# FASCICULE DE BREVET EUROPEEN

(11) **EP 3 679 098 B1**
(45) Date de publication et mention de la délivrance du brevet: **21.12.2022**
(21) Numéro de dépôt: 18782102.0
(22) Date de dépôt: 10.09.2018
(51) Int. Cl.: C08L 61/16, B29C 71/02

(54) **PIECES EN POLYETHER CETONE CETONE PRESENTANT UNE STABILITE DIMENSIONNELLE AMELIOREE**
AUS POLYETHERKETONKETON HERGESTELLTE TEILE MIT VERBESSERTER FORMSTABILITÄT
PARTS MADE FROM POLYETHERKETONEKETONE HAVING IMPROVED DIMENSIONAL STABILITY

(30) Priorité: 08.09.2017 FR 1758296
(43) Date de publication de la demande: 15.07.2020
(73) Titulaire: Arkema France, 92700 Colombes (FR)
(72) Inventeur: BRULE, Benoît, 27170 Beaumont-Le-Roger (FR); DECRAEMER, Nadine, 27170 Beaumontel (FR); ILIOPOULOS, Ilias, 75012 Paris (FR)
(74) Mandataire: Arkema Patent
(86) Numéro de dépôt international: PCT/FR2018/052204
(87) Numéro de publication internationale: WO 2019/048802

(56) Documents cités:
- WO-A1-2012/047613
- US-A1- 2016 108 229

## Description

### DOMAINE DE L'INVENTION

La présente invention concerne des pièces en polyéther cétone cétone présentant une stabilité dimensionnelle améliorée à haute température, ainsi que leur procédé de fabrication.

### ARRIERE-PLAN TECHNIQUE

Le polyéther cétone cétone (PEKK) est un polymère qui présente un point de fusion élevée, d'excellentes propriétés mécaniques ainsi qu'une très bonne résistance chimique.

De ce fait, le PEKK est un polymère particulièrement intéressant pour les domaines techniques exigeants tels que par exemple l'industrie aérospatiale.

Le PEKK peut comporter différents motifs, dérivés de l'acide téréphtalique et de l'acide isophtalique. Certaines propriétés du PEKK telles que son point de fusion ou sa cinétique de cristallisation dépendent de la proportion de ces motifs respectifs.

L'article *Structure, crystallisation and morphology of poly(aryl ether ketone ketone),* de Gardner et al. dans Polymer 33:2483-2495 (1992) décrit l'existence de deux formes cristallines baptisées forme 1 et forme 2 pour le PEKK. WO2012047613A1 divulgue un procédé de traitement thermique d'une composition polymérique comprenant du polyéther cétone cétone capable de contenir deux formes cristallines.

US2016108229A1 divulgue des compositions de poudres de Polyarylène-éther-cétone-cétones adaptées au frittage laser dont la densité tassée est inférieure à 400 Kg/m³ .

Dans certaines applications, on recherche des pièces présentant une bonne stabilité dimensionnelle, y compris à température élevée. Plus précisément, les pièces, exposées à une température élevée, ne doivent pas subir de déformations notables du type gauchissement ou courbures ou retrait ou allongement.

Il existe donc un besoin de fournir des pièces en matériau thermoplastique présentant une stabilité dimensionnelle élevée y compris à température élevée.

### RESUME DE L'INVENTION

L'invention concerne en premier lieu une pièce comprenant du polyéther cétone cétone, dans laquelle le polyéther cétone cétone est au moins en partie cristallin, et dans lequel au moins 50 % en poids du polyéther cétone cétone cristallin est de forme 1.

Selon certains modes de réalisation, au moins 80 % en poids, de préférence au moins 90 % en poids, et de manière plus particulièrement préférée essentiellement la totalité du polyéther cétone cétone cristallin est de forme 1.

Selon certains modes de réalisation, le polyéther cétone cétone comprend au moins 10 % en poids, de préférence au moins 15 % en poids de polyéther cétone cétone cristallin.

Selon certains modes de réalisation, le polyéther cétone cétone comporte des motifs téréphtaliques et éventuellement des motifs isophtaliques, la proportion massique des motifs téréphtaliques par rapport à la somme des motifs téréphtaliques et des motifs isophtaliques étant de 35 à 100 %, de préférence de 55 à 85 %.

Selon certains modes de réalisation, le polyéther cétone cétone représente au moins 30 % en poids, de préférence au moins 50 % en poids, de préférence encore au moins 70 %, et idéalement au moins 80 % en poids de la pièce.

Selon certains modes de réalisation, la pièce comprend également un ou plusieurs éléments supplémentaires choisis parmi des charges, dont de préférence des fibres, un ou plusieurs autres polyaryléther cétones, des additifs et les combinaisons de ceux-ci.

Selon certains modes de réalisation, la pièce est une pièce d'un engin de locomotion aérien ou spatial, ou une pièce d'une installation de forage, ou une pièce destinée à être positionnée en contact avec ou à proximité d'un moteur de véhicule ou d'un réacteur, ou une pièce destinée à être soumise à une friction.

L'invention concerne également l'utilisation de la pièce ci-dessus, dans un appareil, engin ou système, la pièce étant soumise à une température d'utilisation continue supérieure ou égale à 200°C, ou supérieure ou égale à 230°C, ou supérieure ou égale à 260°C, ou supérieure ou égale à 280°C.

Selon certains modes de réalisation, l'utilisation est effectuée dans un appareil, engin ou système, la pièce étant soumise à une température maximale supérieure ou égale à 200°C, ou supérieure ou égale à 250°C, ou supérieure ou égale à 300°C, ou supérieure ou égale à 320°C.

L'invention concerne également un procédé de fabrication d'une pièce selon telle que décrite ci-dessus, comprenant :
- la fourniture de polyéther cétone cétone ;
- la mise en forme du polyéther cétone cétone, et la cristallisation au moins partielle du polyéther cétone cétone sous la forme 1.

Selon certains modes de réalisation, la mise en forme est effectuée par moulage par injection, par injection-compression ou par extrusion.

Selon certains modes de réalisation, le procédé comprend une étape de traitement thermique après l'étape de mise en forme.

La présente invention permet de répondre au besoin exprimé dans l'état de la technique. Elle fournit plus particulièrement des pièces en matériau thermoplastique présentant une stabilité dimensionnelle élevée, à savoir une meilleure résistance au fluage, à température élevée. Ainsi, les pièces peuvent être utilisées dans une large plage de température d'utilisation.

Cela est obtenu en transformant le PEKK de sorte que, dans la pièce obtenue, il soit majoritairement (voir essentiellement ou exclusivement) cristallisé sous la forme 1.

A titre d'exemple, le PEKK présentant une teneur de motifs T de 60 % (comme défini ci-dessous) est un grade particulièrement intéressant car il permet une mise en œuvre par injection à environ 320°C. Toutefois sa cristallisation très lente oblige classiquement à régler la température du moule à environ 80-140°C, notamment 80-120°C (ce qui est un niveau inférieur à la température de transition vitreuse, qui est d'environ 160°C). Cela conduit à des pièces amorphes ayant de mauvaises propriétés à une température supérieure à la température de transition vitreuse. L'invention permet de consolider les propriétés des pièces de ce grade de PEKK à température élevée, et notamment entre 160°C et 300°C environ.

### DESCRIPTION DE MODES DE REALISATION DE L'INVENTION

L'invention est maintenant décrite plus en détail et de façon non limitative dans la description qui suit.

Le PEKK est un polymère comportant une succession de motifs répétés de formule I et/ou de formule II suivantes :

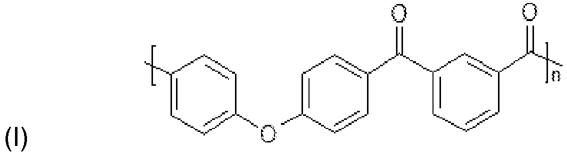

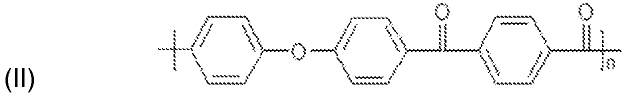

Dans ces formules, n est un nombre entier.

Les motifs de formule I sont des motifs dérivés de l'acide isophtalique (ou motifs I), tandis que les motifs de formule II sont des motifs dérivés de l'acide téréphtalique (ou motifs T).

Dans le PEKK utilisé dans l'invention, la proportion massique de motifs T par rapport à la somme des motifs T et I peut varier de 0 à 5 % ; ou de 5 à 10 % ; ou de 10 à 15 % ; ou de 15 à 20 % ; ou de 20 à 25 % ; ou de 25 à 30 % ; ou de 30 à 35 % ; ou de 35 à 40 % ; ou de 40 à 45 % ; ou de 45 à 50 % ; ou de 50 à 55 % ; ou de 55 à 60 % ; ou de 60 à 65 % ; ou de 65 à 70 % ; ou de 70 à 75 % ; ou de 75 à 80 % ; ou de 80 à 85 % ; ou de 85 à 90 % ; ou de 90 à 95 % ; ou de 95 à 100 %.

Des gammes de 35 à 100%, notamment de 55 à 85 % et plus spécifiquement encore de 60 à 80 %, sont particulièrement appropriées. Dans l'ensemble des gammes énoncées dans la présente demande, les bornes sont incluses sauf mention contraire.

Le choix de la proportion massique de motifs T par rapport à la somme des motifs T et I est l'un des facteurs qui permet d'ajuster la température de fusion du PEKK. Une proportion massique donnée de motifs T par rapport à la somme des motifs T et I peut être obtenue en ajustant les concentrations respectives des réactifs lors de la polymérisation, de manière connue en soi.

A l'état solide, le PEKK peut exister sous forme amorphe ou sous forme partiellement cristalline. La fraction cristalline peut être notamment sous forme 1 ou sous forme 2. La proportion massique du PEKK sous forme cristalline, et plus précisément sous forme 1 et/ou sous forme 2, peut être déterminée par une analyse de diffractométrie de rayons X.

A titre d'exemple, l'analyse peut être effectuée en diffusion des rayons X aux grands angles (WAXS), sur un appareil de type Nano-inXider^{®} avec les conditions suivantes :
- Longueur d'onde : raie principale Ka1 du cuivre (1,54 Angström).
- Puissance du générateur : 50 kV - 0.6 mA.
- Mode d'observation : transmission
- Temps de comptage : 10 minutes.

On obtient ainsi un spectre de l'intensité diffusée en fonction de l'angle de diffraction. Ce spectre permet d'identifier la présence de cristaux, lorsque des pics sont visibles sur le spectre en plus du halo amorphe.

Ce spectre permet aussi d'identifier la présence de la forme 1 et/ou de la forme 2 dans le cristal, en identifiant sur le spectre un ensemble de pics caractéristiques de l'une et l'autre formes.

Les principaux pics caractéristiques de la forme 1 sont situés aux positions angulaires (2θ) suivantes : 18,6° - 20,6° - 23,1° - 28,9°.

Les principaux pics caractéristiques de la forme 2 sont situés aux positions angulaires (2θ) suivantes : 15,5° - 17,7° - 22,6° - 28,0°.

Dans le spectre, on peut mesurer l'aire des principaux pics caractéristiques ci-dessus de la forme 1 (notée A1), l'aire des principaux pics caractéristiques ci-dessus de la forme 2 (notée A2), et l'aire du halo amorphe (notée AH).

La proportion (massique) de PEKK cristallin dans le PEKK est estimée par le rapport (A1+A2)/(A1+A2+AH).

La proportion (massique) des cristaux de forme 1 dans la phase cristalline du PEKK est estimée par le rapport (A1)/(A1+A2).

La proportion (massique) des cristaux de forme 2 dans la phase cristalline du PEKK est estimée par le rapport (A2)/(A1+A2).

Dans le PEKK utilisé dans l'invention, la proportion massique de PEKK cristallin peut notamment varier de 1 à 5 % ; ou de 5 à 10 % ; ou de 10 à 15 % ; ou de 15 à 20 % ; ou de 20 à 25 % ; ou de 25 à 30 % ; ou de 30 à 35 % ; ou de 35 à 40 % ; ou de 40 à 45 % ; ou de 45 à 50 %. Par exemple, le PEKK est de préférence cristallin dans une proportion de moins de 40 %, de préférence encore de moins de 30 %.

Il est avantageux que la teneur de PEKK cristallin soit relativement élevée, par exemple supérieure ou égale à 5 %, ou supérieure ou égale à 10 %, ou encore supérieure ou égale à 15 %, afin de disposer de pièces ayant des performances mécaniques élevées.

Dans le PEKK utilisé dans l'invention, la proportion massique de PEKK de forme 1, par rapport au total du PEKK cristallin, peut notamment varier de 50 à 55 % ; ou de 55 à 60 % ; ou de 60 à 65 % ; ou de 65 à 70 % ; ou de 70 à 75 % ; ou de 75 à 80 % ; ou de 80 à 85 % ; ou de 85 à 90 % ; ou de 90 à 95 % ; ou de 95 à 100 %. Par exemple, cette proportion massique de la forme 1 peut être de préférence d'au moins 80 %, de préférence encore d'au moins 90 %. Le PEKK cristallin peut notamment consister essentiellement (voire consister) en PEKK de forme 1.

Le PEKK des pièces de l'invention présente avantageusement une viscosité inhérente de 0,4 à 1,5 dL/g, de préférence de 0,6 à 1,12 dL/g dans de l'acide sulfurique à 96 %, à la concentration de 0.005 g/mL.

Les pièces selon l'invention peuvent consister essentiellement, voire consister en du PEKK.

Alternativement, elles peuvent comprendre du PEKK tel que décrit ci-dessus et d'autres composants, tels que notamment des charges (dont des fibres) et/ou des additifs fonctionnels. Parmi les additifs fonctionnels, on peut notamment inclure un ou des tensioactifs, stabilisants UV, stabilisants thermiques et/ou agents biocides.

Le PEKK peut également être associé à un ou plusieurs autres polymères, notamment thermoplastiques, appartenant ou non à la famille des PAEK (polyaryléther cétones). De tels PAEK peuvent notamment inclure les polyéther-cétones (PEK), les polyéther-éther-cétones (PEEK), les polyéther-éther-cétone-cétones (PEEKK), les polyéther-cétone-éther-cétone-cétones (PEKEKK), les polyéther-éther-cétone-éther-cétones (PEEKEK), les polyéther-éther-éther-cétones (PEEEK), les polyéther-diphényle-éther-cétones (PEDEK), leurs mélanges et leurs copolymères entre eux ou avec d'autres membres de la famille des PAEK.

De préférence, le PEKK représente, en poids, au moins 50 %, de préférence encore au moins 70 %, ou au moins 80 %, ou au moins 90 % de l'ensemble des polymères présents.

Dans des modes de réalisation particuliers, seul le PEKK est présent en tant que polymère (exception faite d'éventuels charges ou additifs fonctionnels).

Les pièces selon l'invention peuvent être des pièces composites qui comprennent des charges, et notamment des fibres de renfort. Les pièces composites peuvent comporter, en poids, de 1 à 99 %, de préférence de 30 à 90 %, en particulier de 50 à 80 %, et en particulier encore de 60 à 70 % de charges, notamment de fibres de renfort.

Les charges non fibreuses peuvent notamment être des charges minérales telles que l'alumine, la silice, le carbonate de calcium, le dioxyde de titane, les billes de verre, le noir de carbone, le graphite le graphène et les nanotubes de carbone.

Les charges fibreuses peuvent être des fibres dites courtes ou des fibres de renforts (fibres longues ou continues).

Les charges fibreuses peuvent être notamment des fibres de verre, des fibres de quartz, des fibres de carbone, des fibres de graphite, des fibres de silice, des fibres métalliques comme des fibres d'acier, des fibres d'aluminium ou des fibres de bore, des fibres céramiques comme des fibres de carbure de silicium ou de carbure de bore, des fibres organiques de synthèse comme des fibres d'aramide ou des fibres de poly(p-phénylène benzobisoxazole), ou encore des fibres de PAEK, ou encore de mélanges de telles fibres.

De préférence, il s'agit de fibres de carbone ou de fibres de verre, et plus particulièrement de fibres de carbone.

Les fibres sont de préférence non ensimées. Si elles sont ensimées, elles sont de préférence ensimées par un ensimage thermiquement stable (c'est-à-dire un ensimage qui n'engendre pas, lorsqu'il est soumis à des températures excédant 300°C, en particulier excédant 350°C et en particulier de 375°C, pendant au moins 20 min, des espèces réactives susceptibles de réagir de façon significative avec le PEKK).

De préférence, les fibres de renfort se présentent sous la forme de fibres unidirectionnelles, par exemple sous forme de fils regroupant plusieurs milliers de filaments élémentaires (typiquement de 3000 à 48000) mesurant, par exemple, de 6 à 10 µm de diamètre pour les fibres de carbone. Ce type de fibres est connu sous la dénomination de mèche (en anglais « *rovings* »)*.*

Les fibres de renfort peuvent néanmoins aussi être organisées de manière différente, par exemple sous forme de mat, ou encore de textiles obtenus par tissage de mèches.

Les pièces selon l'invention peuvent être fabriquées selon un procédé comprenant au moins la fourniture de PEKK, et la mise en forme du PEKK.

La mise en forme du PEKK peut être effectuée selon toute méthode classique de mise en forme des thermoplastiques ; elle implique donc une phase de fusion du polymère.

La mise en forme peut être effectuée notamment par extrusion, ou par moulage par injection, ou par injection-compression, ou par revêtement, éventuellement complétés par un thermoformage ou un usinage.

Le PEKK est initialement fourni de préférence sous forme de poudre, de granules ou de flocons, et/ou sous forme d'une dispersion, notamment une dispersion aqueuse.

Les additifs, charges et autres constituants éventuels des pièces peuvent être mélangés au PEKK lorsque celui-ci est à l'état fondu par exemple par compoundage dans une extrudeuse. Alternativement, le PEKK peut être mélangé avec des additifs, charges et autres constituants éventuels à l'état solide, par exemple sous forme de poudre.

Lorsqu'une pièce comprend des fibres de renfort, elle peut être réalisée par exemple par introduction et circulation des fibres de renfort dans un bain de dispersion aqueuse de PEKK (et additifs ou autres constituants éventuels). Les fibres imprégnées de PEKK peuvent ensuite être sorties du bain et débarrassées de l'eau, par exemple par séchage dans un four à infra-rouges. Les fibres imprégnées séchées peuvent ensuite être chauffées jusqu'à fusion du PEKK, afin de permettre l'enrobage des fibres par le PEKK. En alternative, on peut également enrober les fibres continues en les circulant dans un lit fluidisé de poudre de PEKK puis en chauffant l'ensemble jusqu'à fusion du PEKK. Les fibres enrobées obtenues sont ensuite le cas échéant mises en forme et dimensionnées, par exemple par calandrage. On peut ainsi obtenir des nappes unidirectionnelles de mèches imprégnées, de tissés imprégnés, ou encore des mélanges fibres-matrices.

Alternativement, les objets obtenus comme décrit au paragraphe précédent sont utilisés en tant que semi-produits, à partir desquels une pièce selon l'invention proprement dite est à son tour préparée. Cette préparation peut être effectuée en fabriquant d'abord une préforme, notamment par placement ou drapage des semi-produits dans un moule. La pièce composite peut être obtenue par consolidation, étape lors de laquelle la préforme est chauffée, généralement sous pression dans un autoclave, de sorte à assembler par fusion les semi-produits. Les semi-produits peuvent ensuite être assemblés, par exemple par drapage manuel ou automatisé ou par dépose robotisée (« *automated fiber placement* »), et mis en forme par consolidation, pour obtenir les pièces de l'invention. Il est également possible de co-consolider des parties de pièces composites en autoclave au moyen d'un nouveau cycle thermique, ou de souder des parties de pièces composites les unes aux autres par échauffement local.

La teneur en PEKK cristallin dans la pièce ainsi que la proportion de forme 1 dans le PEKK cristallin peuvent être ajustées notamment en fonction des conditions de température appliquées lors du procédé de fabrication. Par exemple, dans le cas du moulage par injection, le réglage de la température du moule est un facteur permettant d'ajuster les paramètres ci-dessus.

Dans certains cas, un traitement thermique ou recuit postérieur à la mise en forme proprement dite peut être appliqué. Un tel traitement thermique postérieur doit notamment être utilisé lorsque, après mise en forme, le PEKK est sous forme exclusivement amorphe, ou sous une forme cristalline comportant un taux élevé de forme 2.

Dans d'autres cas, aucun traitement thermique ou recuit n'est appliqué. Cela permet d'éviter des risques de déformation éventuelle lors d'une telle étape. Le choix de paramètres appropriés pour la mise en forme (température du moule en cas de moulage par exemple, rampe de refroidissement...) peut être adapté afin de permettre d'éviter un tel traitement thermique ou recuit.

De manière générale, l'application d'une température relativement élevée au cours du procédé (par exemple la température du moule, dans le cas du moulage par injection) est favorable à la présence du PEKK cristallin de forme 1 dans la pièce finale, et ce quelle que soit la nature des formes cristallines dans le PEKK avant mise en forme.

Le seuil de la température à appliquer au cours du procédé afin d'obtenir la teneur souhaitée en PEKK cristallin de forme 1 dépend notamment de la nature du PEKK et plus particulièrement de la proportion de motifs T par rapport à la somme des motifs T et I. Par exemple, dans le cas du moulage par injection, pour une température de moule fixée (typiquement supérieure à 200°C pour les PEKK cristallins), la forme 1 existera en proportion plus importante si la teneur en motifs T est élevée.

A titre indicatif, les températures de fusion approximatives du PEKK cristallin de forme 1 et du PEKK cristallin de forme 2, en fonction de la teneur en motifs T, figurent dans le tableau suivant :

| **Rapport T / (T+I)** | **Tf forme 2** | **Tf forme 1** |
|---|---|---|
| 60 % | 270°C | 300°C |
| 70 % | 315°C | 332°C |
| 80 % | 355°C | 365°C |

Ces valeurs ont été obtenues par des mesures de calorimétrie différentielle à balayage (DSC) sur des échantillons majoritairement de forme 1 et majoritairement de forme 2.

Par ailleurs, la vitesse de refroidissement de la pièce après mise en forme ou après recuit éventuel peut optionnellement être ajustée afin de favoriser l'apparition de cristaux de forme 1. En effet, un refroidissement lent (par exemple à un taux inférieur ou égal à 50°C/h, ou inférieur ou égal à 30°C/h, ou inférieur ou égal à 10°C/h) est favorable à l'apparition de cristaux de forme 1.

Les pièces selon l'invention peuvent être des pièces de tout objet industriel ou de consommation. En particulier, il peut s'agir de pièces de dispositifs médicaux.

Dans des modes de réalisation préférés, il s'agit de pièces soumises à une température relativement élevée au cours de leur utilisation. En particulier il peut s'agir de pièces d'engin de locomotion aérien ou spatial, ou de pièces d'installation de forage (pour les champs d'hydrocarbures), ou de toute pièce située en contact ou en proximité d'un moteur (par exemple d'un moteur de véhicule maritime, terrestre ou aérien) ou d'un réacteur, et notamment de joints, connecteurs, gaines et pièces structurales. Il peut également s'agir de pièces destinées à être soumises à une friction, c'est-à-dire de pièces en contact mobile avec une ou plusieurs surfaces, en utilisation. De telles pièces peuvent notamment être des supports, des bagues, des sièges de soupapes, des engrenages, des pistons, des bagues de pistons, des guides de soupapes, des pales de compresseurs, des joints et des composants de moteurs.

Dans des modes de réalisation particuliers, les pièces selon l'invention sont soumises, en utilisation, à une température d'utilisation continue supérieure ou égale à 200°C, ou supérieure ou égale à 230°C, ou supérieure ou égale à 260°C, ou supérieure ou égale à 280°C.

La température d'utilisation continue est la température maximale à laquelle la pièce conserve 50 % de ses propriétés initiales au bout de 100000 heures. Elle peut être déterminée selon la norme UL 746 B.

Dans des modes de réalisation particuliers, les pièces selon l'invention sont soumises, en utilisation, à une température maximale supérieure ou égale à 200°C, ou supérieure ou égale à 250°C, ou supérieure ou égale à 300°C, ou supérieure ou égale à 320°C. Cette température maximale est la température la plus élevée à laquelle la pièce est soumise, même pendant une courte durée, au cours de la totalité de son utilisation.

Il convient de noter que les seuils admissibles de température d'utilisation continue et surtout de température maximale peuvent dépendre de la température de fusion du PEKK et donc notamment de la proportion de motifs T par rapport à l'ensemble des motifs T et I dans le PEKK.

Ainsi, avantageusement, la température maximale est inférieure ou égale à la température de fusion de la forme 1 du PEKK utilisé moins 5°C, de préférence inférieure ou égale à la température de fusion de la forme 1 du PEKK utilisé moins 10°C, de préférence encore inférieure ou égale à la température de fusion de la forme 1 du PEKK utilisé moins 20°C, de préférence encore inférieure ou égale à la température de fusion de la forme 1 du PEKK utilisé moins 30°C et de préférence encore inférieure ou égale à la température de fusion de la forme 1 du PEKK utilisé moins 40°C.

### EXEMPLES

Les exemples suivants illustrent l'invention sans la limiter.

### Exemple 1

Des haltères conformes à la norme ISO 527 1BA sont fabriqués par injection à partir de granules de PEKK de référence KEPSTAN^{®} 8002 commercialisé par Arkema, présentant une teneur relative en motifs T de 80%.

Des haltères de deux types A et B sont préparés avec les paramètres suivants : température d'injection de 385°C, température de moule de 273°C pour les haltères A et de 265°C pour les haltères B.

Le temps de cycle (temps de présence dans le moule) est de 40 secondes. Après moulage, les haltères sont éjectés et laissés à refroidir à température ambiante.

Dans les deux cas, le taux de cristallinité déterminé par WAXS est de 14 %.

Des mesures de WAXS permettent de déterminer que les cristaux sont à 100 % de forme 1 dans l'haltère A (selon l'invention), et à 15 % de forme 1 et 85 % de forme 2 dans l'haltère B (comparatif).

La température de fusion de l'haltère A est mesurée à 365°C et la température de fusion de l'haltère B est mesurée à 359°C, par DSC.

Une mesure d'analyse mécanique dynamique (DMA) ne révèle pas de différence significative de module entre les haltères A et B sur la plage de 50 à 350°C.

Enfin, des mesures de suivi de déformation (fluage) sous contrainte sont effectuées sur les deux types d'haltères, à différentes températures. Pour ce faire, on effectue un essai en tension en appliquant une contrainte donnée, et on suit la déformation de chaque haltère à la température considérée.

Les résultats sont résumés dans le tableau ci-dessous :

| **Température** | **Contrainte** | **Déformation haltère A** | **Déformation haltère B** |
|---|---|---|---|
| 320°C | 1,1 MPa | 1,5%, stable | 1,5%, stable |
| 350°C | 0,11 MPa | 0,8 %, stable | 1,3 %, stable |
| 355°C | 0,11 MPa | 1,3 %, stable | 3,5 %, stable |
| 360°C | 0,11 MPa | 3,4 %, stable | > 15 %, pas de stabilisation puis rupture |

Dans le tableau ci-dessous, on considère un échantillon comme stable lorsque sa déformation cesse d'évoluer, jusqu'à une durée maximale de 20 minutes.

On constate que les pièces selon l'invention (haltère A) résistent mieux au fluage à une température supérieure à 320°C que les pièces comparatives (haltère B).

### Exemple 2

Des haltères conformes à la norme ISO 527 1BA sont fabriqués par injection à partir de granules de PEKK de référence KEPSTAN^{®} 6002 commercialisé par Arkema, présentant une teneur relative en motifs T de 60%.

Des haltères de deux types A et B sont préparés comme suit : température d'injection de 340°C, température de moule de 80°C pour les deux types d'haltères.

Après injection, les haltères sont sous forme amorphe. Ils sont ensuite soumis à un traitement thermique :
- 280°C pendant 2 heures pour l'haltère A.
- 225°C pendant 2 heures pour l'haltère B.

Dans les deux cas, le taux de cristallinité déterminé par WAXS est de 13 %.

Des mesures de WAXS permettent de déterminer que les cristaux sont à 95 % de forme 1 et 5 % de forme 2 dans l'haltère A (selon l'invention), et à 15 % de forme 1 et 85 % de forme 2 dans l'haltère B (comparatif).

Des mesures de suivi de déformation (fluage) sous contrainte sont effectuées sur les deux types d'haltères, à différentes températures, de la même manière que dans l'exemple précédent.

Les résultats sont résumés dans le tableau ci-dessous :

| **Température** | **Contrainte** | **Déformation haltère A** | **Déformation haltère B** |
|---|---|---|---|
| 240°C | 1,1 MPa | 2%, stable | 2%, stable |
| 285°C | 0,11 MPa | 1%, stable | 3%, stable |
| 290°C | 0,11 MPa | 1 %, stable | 13 % après 5 min., puis rupture après 6 min |
| 300°C | 0,11 MPa | 7% après 5 min puis rupture après plus de 15 min | Rupture immédiate |

Dans le tableau ci-dessous, on considère un échantillon comme stable lorsque sa déformation cesse d'évoluer, jusqu'à une durée maximale de 20 minutes.

On constate que les pièces selon l'invention (haltère A) résistent mieux au fluage à une température supérieure ou égale à 285°C que les pièces comparatives (haltère B).

## Revendications

1. Pièce comprenant du polyéther cétone cétone, dans laquelle le polyéther cétone cétone est au moins en partie cristallin, et dans lequel au moins 50 % en poids du polyéther cétone cétone cristallin est de forme 1, tel que déterminé selon le protocole décrit dans la description.

2. Pièce selon la revendication 1, dans laquelle au moins 80 % en poids, de préférence au moins 90 % en poids, et de manière plus particulièrement préférée essentiellement la totalité du polyéther cétone cétone cristallin est de forme 1.

3. Pièce selon la revendication 1 ou 2, dans laquelle le polyéther cétone cétone comprend au moins 10 % en poids, de préférence au moins 15 % en poids de polyéther cétone cétone cristallin.

4. Pièce selon l'une des revendications 1 à 3, dans laquelle le polyéther cétone cétone comporte des motifs téréphtaliques et éventuellement des motifs isophtaliques, la proportion massique des motifs téréphtaliques par rapport à la somme des motifs téréphtaliques et des motifs isophtaliques étant de 35 à 100%, de préférence de 55 à 85 %.

5. Pièce selon l'une des revendications 1 à 4, dans laquelle le polyéther cétone cétone représente au moins 30 % en poids, de préférence au moins 50 % en poids, de préférence encore au moins 70 %, et idéalement au moins 80 % en poids de la pièce.

6. Pièce selon l'une des revendications 1 à 5, qui comprend également un ou plusieurs éléments supplémentaires choisis parmi des charges, dont de préférence des fibres, un ou plusieurs autres polyaryléther cétones, des additifs et les combinaisons de ceux-ci.

7. Pièce selon l'une des revendications 1 à 6, qui est une pièce d'un engin de locomotion aérien ou spatial, ou une pièce d'une installation de forage, ou une pièce destinée à être positionnée en contact avec ou à proximité d'un moteur de véhicule ou d'un réacteur, ou une pièce destinée à être soumise à une friction.

8. Utilisation de la pièce selon l'une des revendications 1 à 7, dans un appareil, engin ou système, la pièce étant soumise à une température d'utilisation continue supérieure ou égale à 200°C, ou supérieure ou égale à 230°C, ou supérieure ou égale à 260°C, ou supérieure ou égale à 280°C.

9. Utilisation de la pièce selon l'une des revendications 1 à 7, dans un appareil, engin ou système, la pièce étant soumise à une température maximale supérieure ou égale à 200°C, ou supérieure ou égale à 250°C, ou supérieure ou égale à 300°C, ou supérieure ou égale à 320°C.

10. Procédé de fabrication d'une pièce selon l'une des revendications 1 à 7, comprenant :
- la fourniture de polyéther cétone cétone ;
- la mise en forme du polyéther cétone cétone, et la cristallisation au moins partielle du polyéther cétone cétone sous la forme 1.

11. Procédé selon la revendication 10, dans lequel la mise en forme est effectuée par moulage par injection, par injection-compression ou par extrusion.

12. Procédé selon la revendication 10 ou 11, comprenant une étape de traitement thermique après l'étape de mise en forme.

## Patentansprüche

1. Teil, das Polyetherketonketon umfasst, wobei das Polyetherketonketon zumindest teilweise kristallin ist und wobei mindestens 50 Gew.-% des kristallinen Polyetherketonketons die Form 1 aufweisen, die gemäß dem in der Beschreibung beschriebenen Protokoll bestimmt ist.

2. Teil nach Anspruch 1, wobei mindestens 80 Gew.-%, vorzugsweise mindestens 90 Gew.-% und besonders bevorzugt im Wesentlichen die Gesamtheit des kristallinen Polyetherketonketons die Form 1 aufweisen.

3. Teil nach Anspruch 1 oder 2, wobei das Polyetherketonketon mindestens 10 Gew.-%, vorzugsweise mindestens 15 Gew.-% kristallines Polyetherketonketon umfasst.

4. Teil nach einem der Ansprüche 1 bis 3, wobei das Polyetherketonketon Terephthaleinheiten und gegebenenfalls Isophthaleinheiten umfasst, wobei der Massenanteil der Terephthaleinheiten in Bezug auf die Summe der Terephthaleinheiten und der Isophthaleinheiten 35 bis 100 %, vorzugsweise 55 bis 85 % beträgt.

5. Teil nach einem der Ansprüche 1 bis 4, wobei das Polyetherketonketon mindestens 30 Gew.-%, vorzugsweise mindestens 50 Gew.-%, noch mehr bevorzugt mindestens 70 Gew.-% und idealerweise mindestens 80 Gew.-% des Teils darstellt.

6. Teil nach einem der Ansprüche 1 bis 5, das darüber hinaus einen oder mehrere zusätzliche Bestandteile umfasst, die aus Füllstoffen, vorzugsweise Fasern, einem oder mehreren anderen Polyaryletherketonen, Additiven und Kombinationen davon ausgewählt sind.

7. Teil nach einem der Ansprüche 1 bis 6, bei dem es sich um ein Teil eines Luft- oder Raumfahrzeugs oder ein Teil einer Bohranlage oder ein Teil, das dazu vorgesehen ist, in Kontakt mit oder in der Nähe eines Fahrzeugmotors oder eines Reaktors positioniert zu werden, oder ein Teil handelt, das dazu vorgesehen ist, einer Reibung ausgesetzt zu werden.

8. Verwendung des Teils nach einem der Ansprüche 1 bis 7 in einer Vorrichtung, einem Fahrzeug oder einem System, wobei eine Dauerbetriebstemperatur von mehr als oder gleich 200 °C oder mehr als oder gleich 230 °C oder mehr als oder gleich 260 °C oder mehr als oder gleich 280 °C auf das Teil einwirkt.

9. Verwendung des Teils nach einem der Ansprüche 1 bis 7 in einer Vorrichtung, einem Fahrzeug oder einem System, wobei eine Höchsttemperatur von mehr als oder gleich 200 °C oder mehr als oder gleich 250 °C oder mehr als oder gleich 300 °C oder mehr als oder gleich 320 °C auf das Teil einwirkt.

10. Verfahren zur Herstellung eines Teils nach einem der Ansprüche 1 bis 7, das Folgendes umfasst:
- die Bereitstellung von Polyetherketonketon;
- die Formgebung des Polyetherketonketons und die zumindest teilweise Kristallisation des Polyetherketonketons in der Form 1.

11. Verfahren nach Anspruch 10, wobei die Formgebung durch Spritzgießen, Spritzprägen oder Extrudieren erfolgt.

12. Verfahren nach Anspruch 10 oder 11, das einen Schritt der thermischen Behandlung nach dem Formgebungsschritt umfasst.

## Claims

1. Part comprising polyetherketoneketone, in which the polyetherketoneketone is at least partially crystalline and in which at least 50% by weight of the crystalline polyetherketoneketone is of form 1, as determined according to the protocol described in the description.

2. Part according to Claim 1, in which at least 80% by weight, preferably at least 90% by weight and more particularly preferably essentially all of the crystalline polyetherketoneketone is of form 1.

3. Part according to Claim 1 or 2, in which the polyetherketoneketone comprises at least 10% by weight, preferably at least 15% by weight, of crystalline polyetherketoneketone.

4. Part according to one of Claims 1 to 3, in which the polyetherketoneketone comprises terephthalic units and optionally isophthalic units, the proportion by weight of the terephthalic units, with respect to the sum of the terephthalic units and of the isophthalic units, being from 35% to 100%, preferably from 55% to 85%.

5. Part according to one of Claims 1 to 4, in which the polyetherketoneketone represents at least 30% by weight, preferably at least 50% by weight, more preferably at least 70% by weight and ideally at least 80% by weight of the part.

6. Part according to one of Claims 1 to 5, which also comprises one or more additional elements chosen from fillers, including preferably fibers, one or more other polyaryletherketones, additives and the combinations of these.

7. Part according to one of Claims 1 to 6, which is a part of an air or space locomotion craft, or a part of a drilling installation, or a part intended to be positioned in contact with or close to a vehicle engine or a reactor, or a part intended to be subjected to friction.

8. Use of the part according to one of Claims 1 to 7 in an appliance, craft or system, the part being subjected to a continuous operating temperature of greater than or equal to 200°C, or greater than or equal to 230°C, or greater than or equal to 260°C, or greater than or equal to 280°C.

9. Use of the part according to one of Claims 1 to 7 in an appliance, craft or system, the part being subjected to a maximum temperature of greater than or equal to 200°C, or greater than or equal to 250°C, or greater than or equal to 300°C, or greater than or equal to 320°C.

10. Process for the manufacture of a part according to one of Claims 1 to 7, comprising:
- the provision of polyetherketoneketone;
- the shaping of the polyetherketoneketone and the at least partial crystallization of the polyetherketoneketone in the form 1.

11. Process according to Claim 10, in which the shaping is carried out by injection molding, by injection/compression molding or by extrusion.

12. Process according to Claim 10 or 11, comprising a stage of heat treatment after the shaping stage.
